# EUROPÄISCHE PATENTSCHRIFT

(11) **EP 1 412 064 B1**
(45) Veröffentlichungstag und Bekanntmachung des Hinweises auf die Patenterteilung: **25.11.2009**
(21) Anmeldenummer: 01938187.0
(22) Anmeldetag: 07.05.2001
(51) Int. Cl.: B01D 69/10

(54) **VERFAHREN ZUM HERSTELLEN EINES PLATTENFÖRMIGEN FILTRATIONSKÖRPERS**
METHOD FOR PRODUCING A DISCOID FILTRATION BODY
PROCEDE DE FORMATION D'UN CORPS DE FILTRATION EN PLAQUE

(30) Priorität: 12.05.2000 DE 10023292; 11.08.2000 DE 10039272
(43) Veröffentlichungstag der Anmeldung: 28.04.2004
(73) Patentinhaber: Westfalia Separator AG, 59302 Oelde (DE)
(72) Erfinder: BLÄSE, Dieter, 73557 Mutlangen (DE); OLAPINSKI, Hans, 73773 Aichwald (DE); FEUERPEIL, Hans-Peter, 73529 Schwäbisch Gmünd (DE)
(74) Vertreter: Dr. Weitzel & Partner
(86) Internationale Anmeldenummer: PCT/EP2001/005145
(87) Internationale Veröffentlichungsnummer: WO 2001/085317

(56) Entgegenhaltungen:
- WO-A-00/47312
- DE-A- 4 329 473
- FR-A- 2 771 305
- PATENT ABSTRACTS OF JAPAN vol. 015, no. 472 (C-0889), 29. November 1991 (1991-11-29) & JP 03 202117 A (TOSHIBA CERAMICS CO LTD), 3. September 1991 (1991-09-03) -& DATABASE WPI Section Ch, Week 199141 Derwent Publications Ltd., London, GB; Class J01, AN 1991-301011 XP002178720 & JP 03 202117 A (TOSHIBA CERAMICS CO LTD), 3. September 1991 (1991-09-03)
- RIPPERGER S: "Mikrofiltration mit Membranen" , 1994, WEINHEIM, VCH VERLAG, DE XP002141211 Seite 188 -Seite 189; Abbildungen 5-2
- PATENT ABSTRACTS OF JAPAN vol. 018, no. 371 (C-1224), 13. Juli 1994 (1994-07-13) -& JP 06 099041 A (HITACHI PLANT ENG & CONSTR CO LTD), 12. April 1994 (1994-04-12)

## Beschreibung

Die Erfindung betrifft ein Verfahren zum Herstellen eines plattenförmigen Filtrationskörpers - im folgenden "Filtrationsplatte" genannt.

Auf DE 100 19 672 und DE 100 23 292 wird verwiesen. Dort sind solche Filtrationsplatten beschrieben und dargestellt.

Solche Filtrationsplatten können beispielsweise die Gestalt einer Kreisscheibe haben. Sie bestehen beispielsweise aus einem Filtermembranmaterial, beispielsweise aus porösem Siliciumdioxid. Eine Vorrichtung zur Filtration von fließfähigen Medien kann eine Mehrzahl solcher Filtrationsplatten umfaßen. Die Filtrationsplatten sind dabei koaxial zueinander angeordnet und weisen einen gegenseitigen Abstand auf. Eine Hohlwelle ist durch sämtliche Filtrationsplatten hindurchgeführt. Die einzelne Filtrationsplatte weist in ihrem Inneren Permeat-Ableitkanäle auf, die mit dem Innenraum der Hohlwelle in leitender Verbindung stehen.

An Filtrationsplatten der genannten Art werden besondere Anforderungen gestellt. Diese betreffen insbesondere die Festigkeit der einzelnen Platte. So soll die Filtrationsplatte während des Betriebes den erheblichen Beanspruchungen zufolge von Strömungen in einer Filtrationsanlage standhalten. Die einzelne Platte soll aber auch in sich genügend fest sein, so daß beispielsweise bei Aufbau aus mehreren Lagen der Verbund zwischen solchen Lagen dauerhaft ist. Die Platten sollen sich leicht zusammenfügen lassen zu Plattenpaketen der genannten Bauart. Sie sollen leicht herstellbar und kostengünstig sein. Sie sollen sich leicht handhaben lassen, was die Montage und Demontage anbetrifft.

Die bisher bekannten Filtrationsplatten wie z.B in der WO-A-00 47312 offenbart haben diesen Anforderungen nicht voll und ganz genügt.

In der DE-C-4329473 wird ein Verfahren offenbart, bei dem keramische Filtrationsplatten aus zwei Teilen zusammengesetzt werden. Der Erfindung liegt die Aufgabe zugrunde, Filtrationsplatten derart herzustellen, daß sie den genannten Anforderungen in höherem Maße genügen, als die bisher bekannten Filtrationsplatten.

Diese Aufgabe wird durch die unabhängigen Ansprüche gelöst.

Die Erfinder haben zur Lösung dieser Aufgabe neue Wege beschritten. Gemäß einem ersten Lösungsweg schlagen sie vor, die Filtrationsplatten durch Gießen herzustellen, und zwar auf der Basis des sogenannten Schlickergußverfahrens.

Gemäß einem zweiten Lösungsweg werden die Filtrationsplatten aus sinterfähigem Material hergestellt, das verpreßt und gesintert wird.

Die Erfindung ist anhand der Zeichnung näher erläutert. Darin ist im einzelnen folgendes dargestellt:
- Figur 1: zeigt eine Vorrichtung mit Filterplatten hergestellt gemäß der Erfindung in einer schematischen Aufrißansicht.
- Figur 2: zeigt den Gegenstand_von Figur 1 in einer Draufsicht.
- Figur 3: zeigt eine abgewandelte Ausführungsform des Gegenstandes von Figur 1, wiederum in Draufsicht.
- Figur 4: zeigt ein Segment als Bestandteil einer Filtrationsplatte in Draufsicht.
- Figur 5: zeigt eine Schnittansicht gemäß der Schnittlinie V - V von Figur 4 in einer Abwicklung.
- Die Figuren 6 und 7: zeigen zwei weitere Ausführungsformen von Segmenten in Draufsicht.
- Figur 8: veranschaulicht in einem Axialschnitt eine Filtrationsplatte mit einer bestimmten Kanalkonfiguration.
- Figur 9: zeigt eine Filtrationsplatte in Seitenansicht.
- Figur 10: zeigt in einem zur Plattenebene senkrechten Schnitt - das heißt parallel zur Drehachse der Hohlwellen 1, 2, den Aufbau einer erfindungsgemäß hergestellten Filtrationsplatte.
- Figur 11: veranschaulicht in stark vergrößertem Maßstab die Struktur eines Stützkörpers sowie die Struktur einer Membranfilterschicht.
- Figuren 12, 13, 14: veranschaulichen den Verlauf des Verfahrens zum Herstellen einer erfindungsgemäßen Filtrationsplatte gemäß dem ersten Lösungsweg.
- Figur 15: zeigt schematisch einen Teil einer Vorrichtung zum Durchführen des zweiten Lösungsweges und veranschaulicht dessen einzelne Phasen.

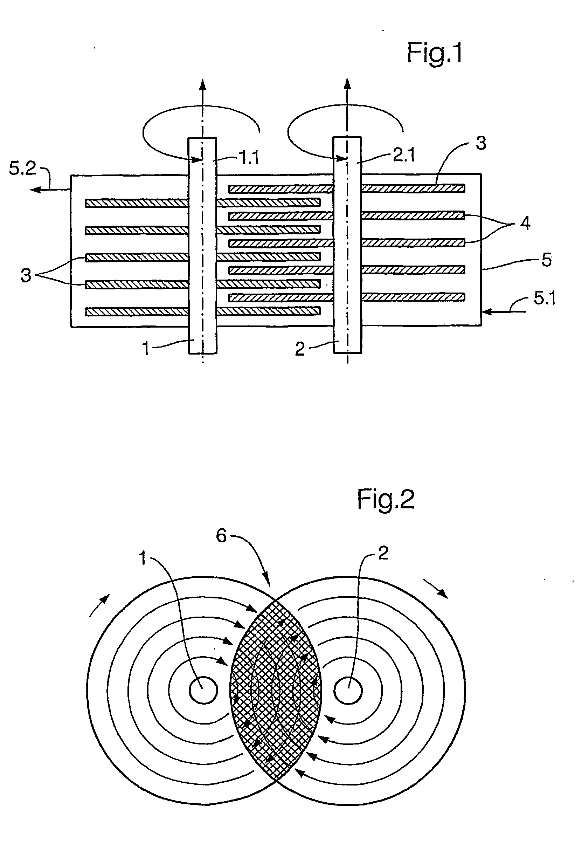

Wie man aus Figur 1 erkennt, weist die Vorrichtung zwei Hohlwellen 1, 2 auf. Den beiden Hohlwellen ist jeweils ein Plattenpaket 3 beziehungsweise 4 zugeordnet. Die Filtrationsplatten sind parallel zueinander angeordnet. Die Filtrationsplatten 3 sind mit der Hohlwelle 1 drehfest verbunden, und die Filtrationsplatten 4 mit der Hohlwelle 2.

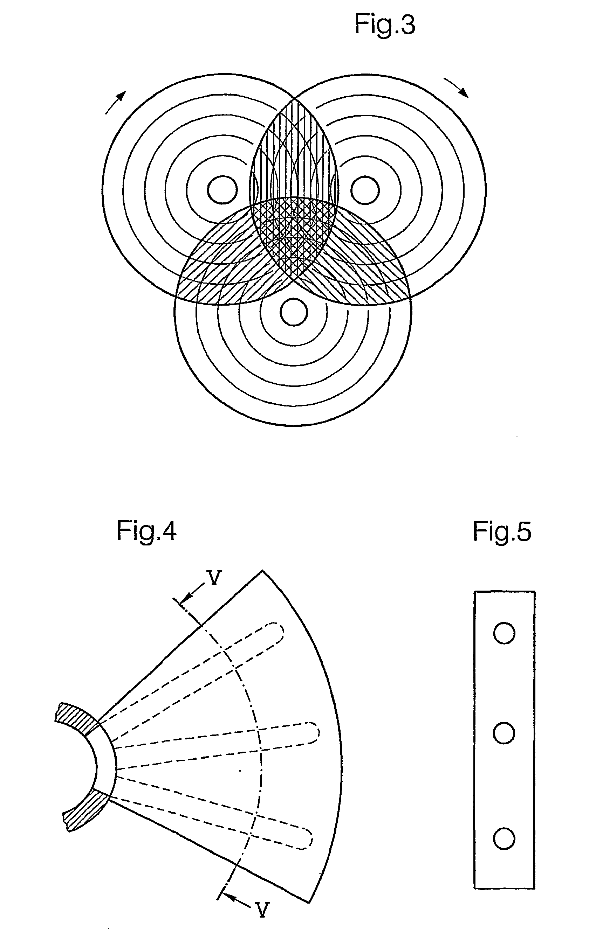

Die Filtrationsplatten 3, 4 bestehen aus porösem keramischen Material mit einer Keramikmembran, die die äußere Filtrationsplattenfläche bildet. Wie aus den Figuren 4 und 5 erkennbar, sind sie mit Kanälen versehen. Da sich die Figuren 4 und 5 auf ein Segment der Filtrationsplatten 3 beziehen, erkennt man dort die Kanäle 3.1. Die Kanäle sind radial angeordnet. Sie verlaufen somit vom Umfangsbereich des Segmentes zur Hohlwelle 3 und stehen mit deren Innenraum in leitender Verbindung. Gewisse Abweichungen von der radialen Richtung sind möglich.

Statt der dargestellten Ausführungsform ist auch die folgende Variante denkbar:
Es sind zwei oder mehrere Pakete vorgesehen. Mindestens eines hiervon weist eine Hohlwelle auf und trägt aktive Filtrationsplatten. Es kann auch eine Anzahl von Paketen mit Dummyplatten bestückt sein, mit oder ohne Hohlwelle.

Die betreffende Hohlwelle sowie die zugeordneten Filtrationsplatten werden hier als "Paket" bezeichnet. Dabei ist das aus Hohlwelle 1 und Filtrationsplatten 3 gebildete Paket genau gleich gestaltet und gleichartig aufgebaut, wie das aus Hohlwelle 2 und den Filtrationsplatten 4 aufgebaute Paket. Es wären jedoch auch Abweichungen hiervon möglich. So könnten beispielsweise die Filtrationsplatten des einen Paketes einen größeren Durchmesser als die Filtrationsplatten des anderen Paketes haben. Im vorliegenden Falle sind die Filtrationsplatten kreisförmig. Auch hier wären Abweichungen möglich. Beispielsweise käme eine ovale Form in Betracht.

Die beiden Pakete sind in einem Behälter 5 angeordnet. Der Behälter 5 weist einen Einlaß 5.1 sowie einen Auslaß 5.2 auf. Die beiden Hohlwellen 1, 2 weisen an ihren oberen Enden Auslässe 1.1 beziehungsweise 2.1 auf.

Die Vorrichtung arbeitet wie folgt

Dem Behälter wird durch EinlaB 5.1 das zu behandelnde Medium zugeführt. Das Filtrat/Permeat gelangt durch die Poren des keramischen Materiales der Keramikscheiben in die Kanäle 3.1 beziehungsweise 4.1 - die letztgenannten hier nicht dargestellt. Das Permeat gelangt von den Kanälen in den Innenraum der beiden Hohlwellen 1, 2 und wird an den Auslässen 1.1, 1.2 abgeführt.

Was nicht durch die Poren des Keramikmaterials hindurchzudringen vermag, gelangt als Retentat zum Auslaß 5.2 des Behälters 5.

Aus der Darstellung gemäß Figur 2 erkennt man, daß die Filtrationsplatten 3 des einen Paketes mit den Filtrationsplatten 4 des anderen Paketes überlappen. Im Überlappungsbereich 6 entsteht eine Turbulenz im Medium. Diese hat eine Reinigungswirkung an der Oberfläche der Filtrationsplatten zur Folge. Die spezifische Permeationsleistung wird groß, und der spezifische Energiebedarf wird klein.

Bei der in Figur 3 gezeigten Ausführungsform sind drei Pakete vorgesehen. Diese sind wiederum in einem Behälter angeordnet - hier nicht dargestellt-.

Eine weitere Möglichkeit besteht darin, eine noch größere Anzahl von Paketen innerhalb ein- und derselben Vorrichtung vorzusehen. So kann beispielsweise ein Paket zentral angeordnet werden, während die übrigen Pakete konzentrisch um das zentrale Paket herumgruppiert werden.

Aus den Figuren 4 und 5 erkennt man, daß die einzelne Filtrationsplatte 3, 4 aus einer Mehrzahl von Segmenten aufgebaut sein kann. Das hier dargestellte Kreissegment ist somit Bestandteil einer Filtrationsplatte 3. Die Filtrationsplatten können jedoch auch ganz und gar aus einem einzigen Teil aufgebaut sein.

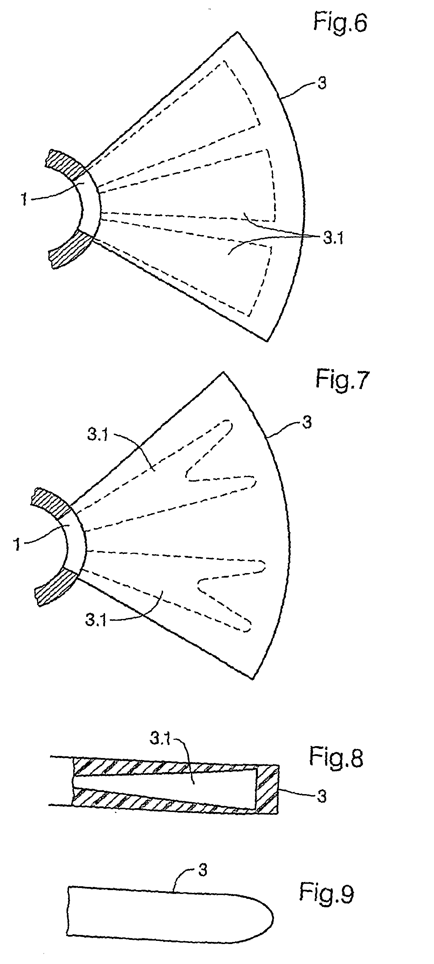

Die in den Figuren 5 und 6 dargestellten Filtrationsplatten 3 weisen Permeat-Kanäle 3.1 bestimmter Konfigurationen auf. Wie man sieht, verjüngen sich die Kanäle in dieser Draufsicht gesehen von außen nach innen. Sie sind somit keilförmig.

Bei der Ausführungsform gemäß Figur 7 sind die Kanäle 3.1 wiederum keilförmig, haben jedoch im radial äußeren Bereich jeweils eine Einbuchtung. Der Kanal hat somit in dieser Draufsicht eine Art Astgabelform.

Der Sinn dieser Kanalgestaltung besteht darin, daß das Permeat hierdurch kurze Wege zum Permeat-Ableitkanal zurückzulegen hat.

Ein anderer Effekt wird erzielt durch die in Figur 8 gezeigte Kanalgestaltung - diesmal in einem Axialschnitt durch das Plattenpaket gesehen. Wie man sieht, verjüngt sich der Kanal hier wiederum von außen nach innen. Der Sinn besteht in folgendem: Bei einer rotierenden Filtrationsplatte steht das Permeat im Außenbereich der Filtrationsplatte unter leicht erhöhtem Druck. Die geschilderte Gestaltung des Kanales kompensiert diesen erhöhten Druck durch die Wandstärkenabnahme. Die Kanäle können schließlich derart gestaltet sein, daß die Fließgeschwindigkeit des Filtrats/Permeats auf dessen Weg zur Hohlwelle hin konstant ist.

Aus Figur 9 erkennt man, daß die Filtrationsplatte 3 in ihrem Umfangsbereich stromlinienförmig gestaltet ist, etwa nach Art der angeströmten Kante eines Tragflügels. Es hat sich gezeigt, daß der Verschleiß der Membran hierdurch erheblich minimiert wird.

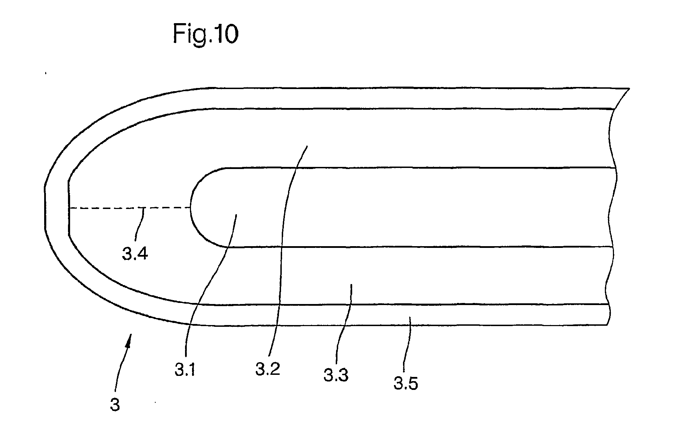

Die in Figur 10 dargestellte Filtrationsplatte 3 ist wie folgt aufgebaut: sie umfaßt zwei Stützkörperhälften 3.2, 3.3. Diese sind entlang einer Ebene 3.4 zusammengefügt. Sie bilden praktisch ein einziges Teil, so daß die Ebene 3.4 bezüglich der Festigkeit keine Bedeutung hat. Auf die Bedeutung der Ebene 3.4 soll weiter unten noch eingegangen werden.

Zwischen den beiden Stützkörperhälften 3.2, 3.3 befinden sich die bereits genannten Permeat-Kanäle 3.1, die das Permeat zu dem Innenraum der betreffenden Hohlwelle 1 leiten.

Die beiden Stützkörperhälften 3.2, 3.3 sind auf ihren Außenseiten wenigstens teilweise mit einer Membranfilterschicht 3.5 beschichtet.

An bestimmten Stellen kann ein Verschleißschutz aufgebracht werden. Dieser kann aus einem besonderen Material bestehen. Es kann aber auch die Membranschichtstärke an bestimmten Stellen besonders groß sein. Ferner ist ein selektives Sintern denkbar, zum Beispiel mittels Laserstrahl.

Die beiden Stützkörper sind auf ihren Außenflächen mit einer Membranfilterschicht 3.5 beschichtet. Im Umfangsbereich ist eine zweite Membranfilterschicht 3.6 aufgebracht. Diese dient vor allem als Verschleißschutz. Zu diesem Zweck können aber auch andere Materialien aufgebracht werden.

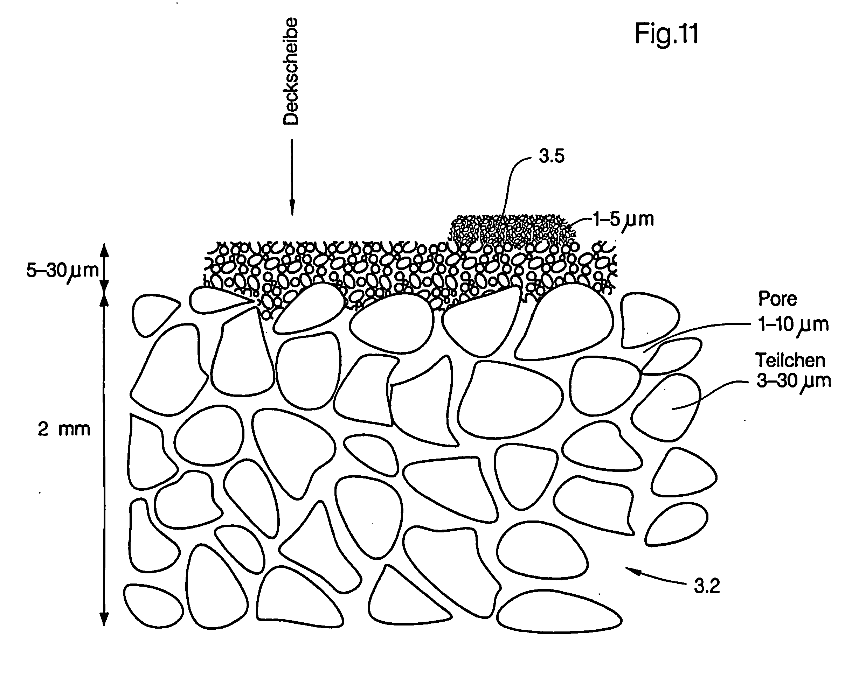

Figur 11 läßt nochmals genauer die Mikrostrukturen einer Stützkörperhälfte 3.2 sowie einer Membranfilterschicht 3.5 erkennen. Dabei ist die Stützkörperschicht aus Teilchen mit einer Teilchengröße von 3 bis 30 µ aufgebaut. Die dazwischen befindlichen Poren liegen in der Größenordnung von 1 bis 10 µ. Die Stützkörperhälfte 3.2 weist im vorliegenden Falle eine Dicke von einigen Millimetern auf, beispielsweise 2 mm. Die Membranfilterschicht hingegen ist vergleichsweise dünn. Ihre Dicke liegt bei ca. 5 bis 30 µ, zum Beispiel bei 20 µ.

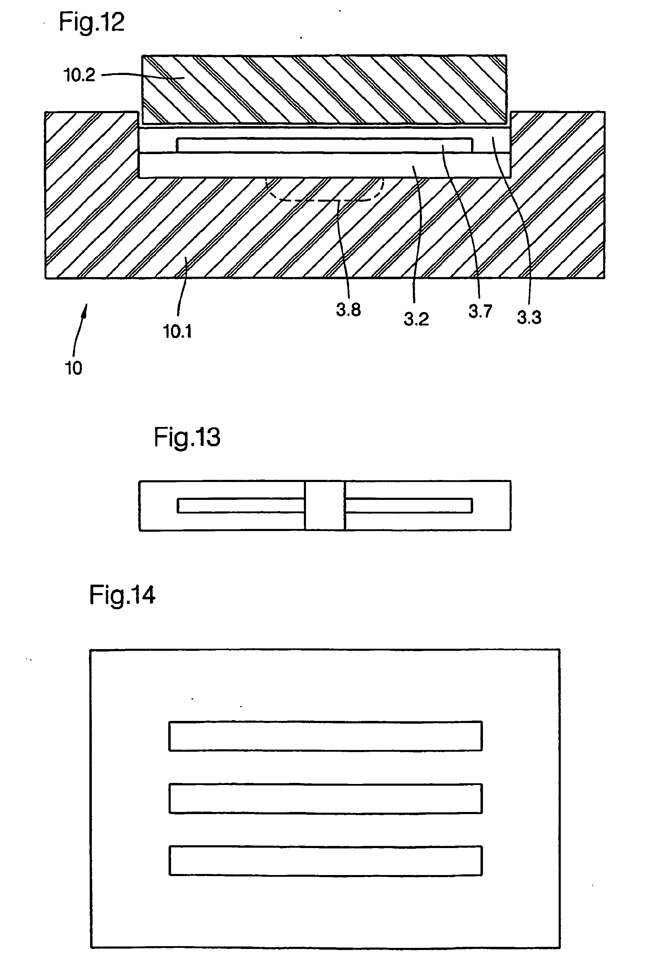

Die Figuren 12 und 13 veranschaulichen ein Verfahren gemäß dem ersten Lösungsweg unter Anwendung des Schlickerguß-Prinzips.

Figur 12 zeigt eine Form 10 zum Herstellen eines Formteiles, umfassend die beiden Stützkörperhäften 3.2, 3.3 sowie eine dazwischenbefindliche Schicht, auf deren Bedeutung weiter unten noch eingegangen werden soll. Die Form 10 weist ein Bodenteil 10.1 sowie einen Deckel 10.2 auf.

Die Form 10 besteht aus porösem, hydrophilen Material, beispielsweise aus Gips. Es hat eine erhebliche Wandstärke, die ein mehrfaches der Dicke des gesamten Formteiles betragen kann.

Das Formnest ist derart bemessen, daß es annäherend der endgültigen Außenkontur des Stützkörpers entspricht, so daß die gebrannte Scheibe zur Erlangung der exakten Endgeometrie (Toleranz) nur minimal an den Außenkonturen nachgearbeitet werden muß, beispielsweise durch Schleifen.

Das Verfahren zum Herstellen des Formteiles verläuft wie folgt: Bei abgenommenem Deckel 10.2 wird zunächst einer der beiden Stützkörperhälften in das Form-Unterteil 10.1 in Suspensionsform eingegossen. Aufgrund des hydrophilen Charakters des Materiales von Formteil 10.1 wird Wasser - oder sonstige Suspensionsflüssigkeit - aus der Suspension der zu bildenden Stützkörperhälfte 3.2 herausgezogen.

Auf die Gußoberfläche der entstehenden Stützkörperhälfte 3.2 wird sodann ein Körper 3.7 aufgelegt. Dieser besteht aus einem Material, das sich in der Wärme verflüchtigt. In Betracht kommen Materialien wie Wachs, Kampfer, Faservlies, Moosgummi und so weiter.

Dieser Zwischenkörper 3.7 ist im allgemeinen relativ dünn, zum Beispiel 2 mm. Er ist mit Ausstanzungen versehen, auf die noch eingegangen werden soll.

Nach dem Auflegen des Zwischenkörpers 3.7 wird ein zweiter Guß vorgenommen. Es wird nunmehr das zur Bildung der zweiten Stützkörperhälfte 3.3 erforderliche Stützkörpermaterial - wiederum in Suspensionsform - in das Formunterteil 10.1 eingegossen, so daß es sich auf die Zwischenschicht 3.7 legt. Es entsteht nunmehr eine innige Verbindung zwischen den beiden Stützkörpermaterialien, und zwar in jedem Falle im Umfangsbereich der beiden Stützkörperhälften 3.2, 3.3, aber auch dort, wo die genannten Aussparungen im Zwischenkörper 3.7 liegen. Die Aussparungen führen zu einer Bildung von Stegen und damit wiederum zu einer innigen Verbindung zwischen den beiden Stützkörperhälften 3.2, 3.3, so daß aus diesen beiden Körpern ein einheitlicher, in sich fester Körper gebildet wird.

Aufgrund der Eigenschaft des Materiales der Zwischenschicht 3.7, sich unter Wärme zu verflüchtigen, kommt es zu einer Auflösung des Materiales, so daß Hohlräume entstehen, die die Permeat-Ableitkanäle 3.1 bilden - siehe die Figuren 4 bis 8 und 10.

Nach dem Eingießen des Materiales für die zweite Stützkörperhälfte 3.1 muß dafür gesorgt werden, daß entsprechend den Regeln des Schlickergußverfahrens wiederum Wasser der aufgegossenen Suspension entzogen wird. Dies kann entweder über die untere Stützkörperhälfte in Richtung des Formunterteiles 10.1 oder über den Deckel 10.2 der Form 10 erfolgen.

Der Deckel 10.2 kann nach Vollenden des zweiten Gusses aufgebracht werden. Es ist aber auch denkbar, bereits von Anfang an den Deckel 10.2 mit dem Formunterteil 10.1 zu vereinigen und dabei einen entsprechenden Zwischenraum zum Einführen der betreffenden Gußmengen zu belassen; die Gußmengen wären in einem solchen Fall durch geeignete Öffnungen dem Formnest zuzuführen. Jedenfalls muß ein Kontakt hergestellt werden zwischen der Innenfläche des Deckels 10.2 und der Oberfläche des zweiten Gusses.

Eine besonders interessante Variante ist die folgende: Die Form 10 - eingeschlossen das Form-Unterteil 10.1 und den Deckel 10.2 - besteht aus porösem Material, das nicht oder nicht notwendigerweise hydrophilen Charakter haben muß. Der Zwischenkörper 3.7 wird im Formnest an der richtigen Stelle positioniert. In das Formnest wird durch eine entsprechende Öffnung Suspension injiziert, zweckmäßigerweise unter einem gewissen Druck. Dabei füllt es das Formnest aus und umhüllt den Zwischenkörper 3.7, so daß dieser voll und ganz in die Suspension eingebettet wird.

Die Suspension kann nunmehr entwässert werden, und zwar entweder durch Druck, der von außen aufgebracht wird, zum Beispiel durch Druck, der durch die Injektionsöffnung hindurch wirkt, oder durch andere Öffnungen. Die Entwässerung kann aber auch dadurch vollzogen werden, daß ein Unterdruck durch die Form hindurch auf die Suspension einwirkt, und daß somit Flüssigkeit durch die Poren der Form hindurch abgesaugt wird.

Eine Alternative besteht in folgendem:
Wie bei dem zuvor genannten Ausführungsbeispiel wird der Zwischenkörper im Formnest positioniert. Sodann wird die Suspension in das Formnest eingebracht. Das in der Suspension enthaltene Bindemittel wurde in ganz bestimmter Weise ausgewählt, und zwar derart, daß es zu einem Polymerisationsprozeß kommt. Das Gußteil - die beiden Stützkörperhälften 3.2, 3.3 in Figur 12 - verfestigen sich deshalb. Es wird somit das Entwässern mit allen seinen Nachteilen vermieden. Bei diesem letztgenannten Verfahren muß die Form nicht unbedingt aus porösem Material bestehen, sondern kann geschlossene Oberflächen aufweisen.

Das Formnest kann auch derart gestaltet werden, daß wenigstens einer der beiden Stützkörperhälften 3.2, 3.3 jeweils eine Nabe angegossen wird. Siehe die Kontur einer entsprechenden Aussparung 3.8 des Formnestes.

Figur 13 zeigt das entformte Formteil. In seinem Zentrum kann eine Bohrung vorgesehen werden. Diese kann derart bemessen sein, daß die betreffende Hohlwelle 1 hindurchgeführt werden kann. Es genügt aber auch, eine kleinere Bohrung vorzusehen, die zu einem späteren Zeitpunkt auf das Sollmaß gebracht wird.

Figur 14 veranschaulicht beispielsweise den Vorgang des Aufbringens einer Keramik-Membranfilterschicht nach dem Dip-Coating Verfahren auf die Keramikscheibe. Zu diesem Zwecke sind mehrere Formteile parallel und koaxial zueinander angeordnet und in einem Tauchbad mit dem entsprechenden Membranfiltermaterial eingebracht. Die Membranfilterschicht wird anschließend getrocknet und gesintert. Es sind jedoch auch andere Verfahren zum Aufbringen der Membran möglich.

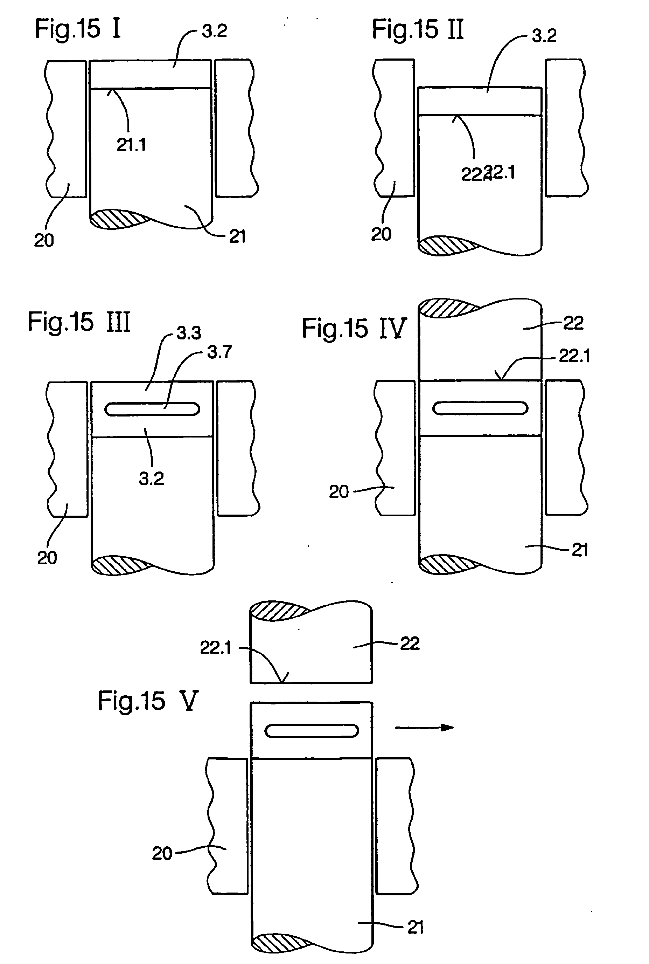

Figur 15 zeigt einen wesentlichen Teil einer Vorrichtung zum Durchführen des zweiten Lösungsweges. Man erkennt einen Kolben 21 mit einer Stirnfläche 21.1. Man erkennt ferner eine Zylinderbüchse 20, in der der Kolben 21 geführt ist.

Zum Durchführen des Verfahrens wird in einer ersten Phase I sinterfähiges Material auf die Stirnfläche 21.1 des Kolbens 21 aufgebracht, so daß sich eine Schüttung 3.2 ergibt, die später eine der beiden Stützkörperhälften darstellt.

In Phase II ist der Kolben 21 um eine bestimmte Wegstrecke nach unten gefahren. Genau wie bei der Darstellung gemäß der Figuren 12 - 14 wird auch hier nach Aufbringen der ersten Schüttung 3.2 ein Zwischenkörper aufgebracht, bestehend aus einem Material, das sich unter bestimmten Bedingungen verflüchtigen kann, ferner eine zweite Schüttung, die die zweite Stützkörperhälfte darstellt. Dieser Zustand ist in Phase III gezeigt. Man erkennt dort den immer noch abgefahrenen Kolben 21, der aber nun die erste Schüttung, den Zwischenkörper sowie die zweite Schüttung trägt. Die beiden Schüttungen gehen dabei ineinander über, so daß keinerlei Trennfuge besteht. Aus den beiden Schüttungen ist nunmehr ein einziges Formteil geworden, das den Zwischenkörper 3.7 umschließt.

Phase IV zeigt den Kolben 21, der sich nach wie vor in der Position von Phase III befindet, ferner das genannte Formteil mit Zwischenkörper. Man erkennt weiterhin einen zweiten Kolben 22, der von oben her auf das Formteil herabgesenkt ist. Das Formteil wird nunmehr zwischen den beiden Kolben 21, 22 verpreßt, wobei mindestens einer der beiden Kolben relativ zum anderen verfahren wird. Wird Kolben 22 verfahren, so läuft er in derselben Zylinderhülse 20, wie Kolben 21.

Gleichzeitig mit dem Aufbringen von Druck kann auch Wärme auf das Formteil aufgebracht werden.

In Phase V sind die beiden Kolben 21, 22 nach oben hochgefahren. Kolben 22 ist dabei derart abgehoben, daß er das Formteil nicht mehr berührt. Das Formteil befindet sich jetzt mit seiner Unterkante auf der Höhe der Oberkante der Zylinderhülse 20. Es kann in Richtung des Pfeiles verschoben und damit von Kolben 21 abgenommen werden.

Auf die Phase V folgt ein Sinterprozeß. Dabei wird das Formteil hohen Temperaturen unterworfen. Dabei entsteht der nunmehr feste Stützkörper. Der Zwischenkörper 3.7 besteht aus einem Material, das bei Einwirkung entsprechender Temperaturen und/oder Chemikalien entweder sich verflüchtigt oder aufgelöst wird, so daß entsprechende Freiräume im Stützkörper verbleiben, um bei dem fertigen plattenförmigen Filtrationskörper als Kanäle zu dienen.

Das Zwischenkörpermaterial ist außerdem zweckmäßigerweise nichtkompressibel.

Statt der in der Figurenbeschreibung genannten Membranfilterschicht kann auch eine sonstige filtrierende Schicht verwendet werden. Diese kann wie folgt beschaffen sein:
Es kann eine Membran sein, die beispielsweise aus Keramik oder Polymer oder Metall besteht. Es kann aber auch ein Sieb oder ein Vlies sein. Dieses kann aus Metall oder aus Polymer bestehen.

Die Hohlwelle mit den Filtrationsplatten kann eine Rotationsbewegung um ihre Längsachse ausführen.

## Patentansprüche

1. Verfahren zum Herstellen eines plattenförmigen Filtrationskörpers (Filtrationsplatte), umfassend:
zwei miteinander innig verbundene Stützkörperhälften, die aus porösem Material bestehen und Permeat-Ableitkanäle zwischen sich einschließen;
wenigstens eine filtrierende Schicht, die auf den Außenseiten der Stützkörperhälften aufgebracht ist, mit den folgenden Verfahrensschritten:
a) die beiden Stützkörperhälften (3.2, 3.3) werden durch Gießen nach Art des Schlickergusses hergestellt;
b) für die Gussform (10) wird poröses Material verwendet ;
c) das Formnest wird derart bemessen, dass seine Innenkontur annähernd der Außenkontur des Stützkörpers (3.2, 3.3) entspricht;
d) zum Herstellen der beiden verbundenen Stützkörperhälften (3.2, 3.3) wird eine erste Menge suspendierten Stützkörpermateriales, die der Stützkörperhälfte (3.2) entspricht, in die Form (10.1) gegossen;
e) es wird ein Zwischenkörper (3.7), der als Gießkem fungiert und aus einem unter Wärmeeinfluss sich verflüchtigenden Material besteht und Aussparungen aufweist, auf die erste Menge suspendierten Stützkörpermateriales aufgebracht;
f) es wird eine zweite Menge suspendierten Stützkörpermateriales, die der zweiten Stützkörperhälfte (3.3) entspricht, in die Form (10.1) gegossen;
g) das gesamte Formteil - umfassend die beiden verbundenen Stützkörperhälften (3.2, 3.3) sowie den Zwischenkörper (3.7) wird aus der Form (10) herausgenommen und gesintert;
h) auf den Außenseiten des Formteiles wird wenigstens eine filtrierende Schicht (3.5) aufgebracht

2. Verfahren nach Anspruch 1, **dadurch gekennzeichnet, dass** auf den Außenseiten des Formteiles zwei oder mehrere filtrierende Schichten aufgebracht werden.

3. Verfahren zum Herstellen eines plattenförmigen Filtrationskörpers (Filtrationsplatte), umfassend:
zwei innig miteinander verbundene Stützkörperhälften, die aus porösem Material bestehen und Permeat-Ableitkanäle zwischen sich einschließen;
wenigstens eine filtrierende Schicht, die auf den Außenseiten der Stützkörperhälften aufgebracht ist, mit den folgenden Verfahrensschritten:
a) es wird eine erste Menge sinterfähigen Pulvers in'ein Formnest geschüttet, dessen Innenkontur der Außenkontur des Stützkörpers entspricht;
b) es wird auf die Schüttung ein Zwischenkörper aufgebracht, der aus einem unter Druck und/oder Wärme sich verflüchtigenden Material besteht und Aussparungen aufweist ;
c) es wird eine zweite Menge sinterfähigen Pulvers auf den Zwischenkörper aufgeschüttet ;
d) die beiden Schüttungen mit dem dazwischen befindlichen Zwischenkörper werden durch Verdichten zu einem Zwischenprodukt geformt;
e) das Zwischenprodukt wird gesintert;
f) das Zwischenprodukt wird mit einer filtrierenden Schicht versehen.

4. Verfahren nach Anspruch 3, **dadurch gekennzeichnet, dass** das sinterfähige Pulver ein Keramikpulver oder ein Metallpulver oder ein Kunststoffpulver ist.

5. Verfahren nach Anspruch 3 oder 4, **dadurch gekennzeichnet, dass** die beiden Schüttungen mit dem dazwischen befindlichen Zwischenkörper zunächst einer Verdichtung und sodann einem Sintern unterworfen werden.

6. Verfahren nach einem der Ansprüche 3 oder 4, **dadurch gekennzeichnet, dass** das Zwischenprodukt nach dem Herausnehmen und/oder nach dem Sintern aus dem Formnest mechanisch bearbeitet wird.

7. Verfahren nach einem der Ansprüche 3 bis 6, **dadurch gekennzeichnet, dass** die Begrenzungsflächen des Formnestes in axialer Richtung die Stirnflächen (21.1, 22.1) von Kolben (21, 22) sind, und in radialer Richtung eine Zylinderhülse (20).

8. Verfahren nach Anspruch 7, **dadurch gekennzeichnet, dass** die Stirnflächen (21.1, 22,1) der Kolben (21, 22) eben oder konvex oder konkav sind.

9. Verfahren zum Herstellen eines plattenförmigen Filtrationskörpers (Filtrationsplatte), umfassend zwei innig miteinander verbundene Stützkörperhälften (3.2, 3.3), mit den folgenden Verfahrensschritten:
a) es wird eine geteilte Gussform (10) bereitgestellt, umfassend zwei Gussformteile (10.1, 10.2) die ein Formnest miteinander bilden, dessen Innenkontur der Außenkontur des Stützkörpers (3.2, 3.3) entspricht;
b) in das Formnest wird ein Zwischenkörper (3.7) eingebracht, der als Gießkern fungiert und aus einem unter Wärmeeinfluss sich verflüchtigenden Material besteht und Aussparungen aufweist;
c) in das Formnest wird eine entsprechende Menge suspendierten Stützkörpermateriales injiziert, so dass es den Zwischenkörper (3.7) allseitig umgibt.
d) als Material für die Form (10) wird ein offenporiges Material verwendet;
e) die Suspension wird durch Aufbringen von Druck oder Unterdruck durch die Poren des Materiales der Form (10) entwässert;
f) nach dem Entwässern wird das gesamte Formteil - umfassend die beiden Stützkörperteile (3.2, 3.3) sowie den Zwischenkörper (3.7) - aus der Form entnommen, gesintert und mit mindestens einer filtrierenden Schicht versehen.

10. Verfahren nach einem der Ansprüche 1 bis 9, **dadurch gekennzeichnet, dass** das Formnest tellerförmig ist.

11. Verfahren nach einem der Ansprüche 1 bis 10, **dadurch gekennzeichnet, dass** die filtrierende Schicht eine Membran ist, zum Beispiel aus Keramik oder Polymer oder Metall, oder ein Sieb bzw. Vlies aus Metall oder Polymer.

## Claims

1. A method for producing a plate-type filtration body (filtration plate), comprising two intimately connected support body halves which consist of porous material and enclose discharge ducts for permeate between themselves, at least one filtrating layer which is applied to the outsides of the support body halves, with the following method steps:
a) the two support body halves (3.2, 3.3) are produced by casting in the manner of slip casting;
b) porous material is used for the mold (10);
c) the mold cavity is dimensioned in such a way that its inside shape corresponds approximately to the outside shape of the support body (3.2, 3.3);
d) a first quantity of suspended support body material which corresponds to the support body half (3.2) is poured into the mold (10.1) for producing the two connected support body halves (3.2, 3.3);
e) an intermediate body (3.7) which acts as a core and consists of a material evaporating under the application of heat and comprises recesses is applied to the first quantity of suspended support body material;
f) a second quantity of suspended support body material which corresponds to the second support body half (3.3) is poured into the mold (10.1);
g) the entire molded part, comprising the two connected support body halves (3.2, 3.3) and the intermediate body (3.7), is removed from the mold and sintered;
h) at least one filtering layer (3.5) is applied to the outsides of the molded part.

2. A method according to claim 1, **characterized in that** two or more filtering layers are applied to the outsides of the molded part.

3. A method for producing a plate-type filtration body (filtration plate), comprising two intimately connected support body halves which consist of porous material and enclose discharge ducts for permeate between themselves, at least one filtrating layer which is applied to the outsides of the support body halves, with the following method steps:
a) A first quantity of powder with sintering capability is poured into a mold cavity whose inside shape corresponds to the outside shape of the support body;
b) an intermediate body is applied to the charge which consists of a material that evaporates under pressure and/or heat and comprises recesses;
c) a second quantity of power with sintering capability is poured onto the intermediate body;
d) the two charges with the interposed intermediate body are formed by compacting into an intermediate product;
e) the intermediate product is sintered;
f) the intermediate product is provided with a filtrating layer.

4. A method according to claim 3, **characterized in that** the power with sintering capability is a ceramic power or a metal powder or a plastic powder.

5. A method according to claim 3 or 4, **characterized in that** the two charges with the interposed intermediate body are subjected at first to compacting and then to sintering.

6. A method according to one of the claims 3 or 4, **characterized in that** the intermediate product is worked mechanically after the removal and/or after the sintering from the mold cavity.

7. A method according to one of the claim 3 to 6, **characterized in that** the boundary surfaces of the mold cavity in the axial direction are the face surfaces (21.1, 22.1) of pistons (21, 22) and a cylinder sleeve (20) in the radial direction.

8. A method according to claim 7, **characterized in that** the face surfaces (21.1, 22.1) of the pistons (21, 22) are planar or convex or concave.

9. A method for producing a plate-type filtration body (filtration plate), comprising two intimately connected support body halves (3.2, 3.3), with the following method steps:
a) a divided mold (10) is provided, comprising two mold parts (10.1, 10.2) which form a mold cavity with each other, the inside shape of which corresponds to the outside shape of the support body (3.2, 3.3);
b) an intermediate body (3.7) is introduced into the mold cavity which acts as a core and consists of a material evaporating under the application of heat and comprises recesses;
c) a respective quantity of suspended support body material is injected into the mold cavity, so that it encloses the intermediate body (3.7) on all sides;
d) an open-pored material is used as a material for the mold (10);
e) the suspension is dewatered through the pores of the material of the mold (10) by application of pressure or negative pressure;
f) after the dewatering, the entire mold part, comprising the two support body parts (3.2, 3.3) and the intermediate body (3.7), is removed from the mold, sintered and provided with at least one filtrating layer.

10. A method according to one of the claims 1 to 9, **characterized in that** the mold cavity is plate-shaped.

11. A method according to one of the claims 1 to 10, **characterized in that** the filtrating layer is a membrane, e.g. of ceramic or polymer or metal, or a screen or a non-woven material made of metal or polymer.

## Revendications

1. Procédé de fabrication d'un élément filtrant en forme de plaque (plaque de filtration), comprenant :
deux moitiés d'élément de support reliées étroitement entre elles, qui se composent d'un matériau poreux et renferment entre elles des canaux d'évacuation du perméat ;
au moins une couche filtrante appliquée sur les faces extérieures des moitiés d'élément de support,
comprenant les étapes de procédé suivantes :
a) les deux moitiés d'élément de support (3.2, 3.3) sont fabriquées par coulée en barbotine ;
b) un matériaux poreux est utilisé pour le moule de coulée (10) ;
c) la cavité du moule est dimensionnée de telle façon que son contour intérieur corresponde approximativement au contour extérieur de l'élément de support (3.2, 3.3) ;
d) pour fabriquer les deux moitiés d'élément de support (3.2, 3.3) assemblées, une première quantité de matériau de l'élément de support en suspension, correspondant à la moitié d'élément de support (3.2), est coulée dans le moule (10.1) ;
e) un élément intermédiaire (3.7) servant de noyau de moule et composé d'un matériau qui s'évapore sous l'action de la chaleur et présentant des ouvertures est posé sur la première quantité de matériau de l'élément de support en suspension ;
f) une deuxième quantité de matériau de l'élément de support en suspension, correspondant à la deuxième moitié de l'élément de support (3.3), est coulée dans le moule (10.1) ;
g) l'ensemble de la pièce moulée, comprenant les deux moitiés d'élément de support (3.2, 3.3) reliées et l'élément intermédiaire (3.7), est retirée du moule (10) et frittée ;
h) au moins une couche filtrante (3.5) est appliquée sur les faces extérieures de la pièce moulée.

2. Procédé selon la revendication 1, **caractérisé en ce que** deux ou plusieurs couches filtrantes sont appliquées sur les faces extérieures de la pièce moulée.

3. Procédé de fabrication d'un élément filtrant en forme de plaque (plaque de filtration), comprenant :
deux moitiés d'élément de support reliées étroitement entre elles, qui se composent d'un matériau poreux et renferment entre elles des canaux d'évacuation du perméat ;
au moins une couche filtrante appliquée sur les faces extérieures des moitiés d'élément de support,
comprenant les étapes de procédé suivantes :
a) une première quantité de poudre frittable est versée dans une cavité de moule dont le contour intérieur correspond au contour extérieur de l'élément de support ;
b) un élément intermédiaire composé d'un matériau qui s'évapore sous l'action de la pression et/ou de la chaleur et présentant des ouvertures est déposé sur l'apport de poudre ;
c) une deuxième quantité de poudre frittable est versée sur l'élément intermédiaire ;
d) les deux apports de poudre renfermant entre eux l'élément intermédiaire sont compressés et mis en forme pour donner un semi-produit ;
e) le semi-produit est filtré ;
f) le semi-produit est doté d'une couche filtrante.

4. Procédé selon la revendication 3, **caractérisé en ce que** la poudre frittable est une poudre de céramique ou une poudre de métal ou une poudre de plastique.

5. Procédé selon la revendication 3 ou 4, **caractérisé en ce que** les deux apports de poudre renfermant entre eux l'élément intermédiaire sont d'abord soumis à une compression puis à un frittage.

6. Procédé selon l'une des revendications 3 ou 4, **caractérisé en ce que** le semi-produit est usiné mécaniquement après le retrait de la cavité de moule et/ou après le frittage.

7. Procédé selon l'une des revendications 3 à 6, **caractérisé en ce que** les surfaces de référence de la cavité de moule sont les faces frontales (21.1, 22.1) de pistons (21, 22) dans le sens axial et une douille cylindrique (20) dans le sens radial.

8. Procédé selon la revendication 7, **caractérisé en ce que** les faces frontales (21.1, 22.1) des pistons (21, 22) sont planes ou convexes ou concaves.

9. Procédé de fabrication d'un élément filtrant en forme de plaque (plaque de filtration), comprenant deux moitiés d'élément de support (3.2, 3.3) reliées étroitement entre elles, comprenant les étapes de procédé suivantes :
a) un moule de coulée partagé (10), comprenant deux parties de moule de coulée (10.1, 10.2) qui forment entre elles une cavité de moule dont le contour intérieur correspond au contour extérieur de l'élément de support (3.2, 3.3), est préparé ;
b) un élément intermédiaire (3.7) servant de noyau de moule et composé d'un matériau qui s'évapore sous l'action de la chaleur et présentant des ouvertures est introduit dans la cavité de moule ;
c) une quantité appropriée de matériau d'élément de support en suspension est injectée dans la cavité de moule de façon à entourer de toutes parts l'élément intermédiaire (3.7) ;
d) le matériau utilisé pour le moule (10) est un matériau à pores ouverts ;
e) la suspension est déshydratée par l'application de pression ou d'une dépression à travers les pores du matériau du moule (10) ;
f) après la déshydratation, l'ensemble de la pièce moulée, comprenant les deux moitiés d'élément de support (3.2, 3.3) et l'élément intermédiaire (3.7), est retiré du moule, fritté, éventuellement usiné et doté d'au moins une couche filtrante.

10. Procédé selon l'une des revendications 1 à 9, **caractérisé en ce que** la cavité de moule est en forme de disque.

11. Procédé selon l'une des revendications 1 à 10, **caractérisé en ce que** la couche filtrante est une membrane, par exemple en céramique ou en polymère ou en métal, ou un tamis ou un non-tissé en métal ou en polymère.
